# EUROPEAN PATENT APPLICATION

(11) **EP 1 802 065 A1**
(43) Date of publication of application: **27.06.2007**
(21) Application number: 06026592.3
(22) Date of filing: 21.12.2006
(51) Int. Cl.: H04L 27/26

(54) **Apparatus and method for crest factor reduction in a communication system**

(30) Priority: 21.12.2005 KR 20050126628
(71) Applicant: LG - Nortel Co., Ltd., 679, Yeoksam-dong Gangnam-gu Seoul (KR)
(72) Inventor: Kang, Hyoung, Chang, Seoul 153-752 (KR)
(74) Representative: Katérle, Axel

(57) **Abstract**

Embodiments of the present invention may provide a CFR apparatus and method in a communication system. The CFR apparatus may include a clipping noise generating device to generate a clipping noise signal for a communication signal based on a clipping threshold value, and a clipping control device to control the clipping threshold value in accordance with an average power of the communication signal.

## Description

The present application claims priority from Korean Patent Application No. 10-2005-126628, filed December 21, 2005, the subject matter of which is incorporated herein by reference.

### BACKGROUND

### Field

Embodiments of the present invention may relate to a Crest Factor Reduction (CFR) method and apparatus. More specifically, embodiments of the present invention may relate to an adaptive CFR method and apparatus for determining a clipping threshold value of a communication signal according to an average power of the communication signal to effectively reduce a Peak to Average Power Ratio (PAPR) of the communication signal.

### Background

A radio communication system may perform communication using a frequency band assigned thereto and may subdivide the assigned frequency band into a plurality of Frequency Assignments (FAs) for its use. CDMA 1x, EV-DO, EV-DV, W-CDMA, WiBro, WiMax, etc. employ a transmission method using FAs where signals of different FAs are combined before transmission (i.e., a multiple FA transmission method). When using a multiple FA transmission method, the PAPR of the combined signal may increase 1 to 2 dB as the signals are digitally combined and filtered.

Such an increase in the PAPR may result in a price increase of a power amplifier used in a base station of the communication system. Various methods have been developed to reduce the PAPR of the signal transmitted from a transceiver of the communication system. The CFR method is one method for reducing the PAPR. According to the CFR method, portions of an inputted communication signal exceeding a predetermined clipping threshold value in magnitude may be extracted to thereby generate a clipping noise. Further, the clipping noise may be subtracted from the inputted communication signal to reduce the PAPR of the inputted communication signal. The clipping threshold value may be set to an appropriate value that satisfies a back-off factor of the power amplifier according to the PAPR at an end of a base station.

However, according to the CFR method, variation in signal quality may be observed as an average power of the inputted communication signal increases or decreases. This is because a fixed value may be used as a clipping threshold value. The quality of the communication signal can be quantized by an Error Vector Magnitude (EVM). The EVM may represent a distance between an I-Q point of the received communication signal and an ideal constellation point on an I-Q plane. When a communication signal of a low average power with magnitude below the clipping threshold value is inputted, the clipping operation may not be performed. Thus, the EVM of the communication signal may improve while the PAPR of the communication signal increases. On the other hand, when the average power of the communication signal increases, the PAPR of the communication signal improves due to the clipping operation. However, the EVM of the communication signal may deteriorate. For example, with the CFR threshold value set to 0.5 and a target value of the output signal set to the PAPR value of 10 dB, if the power of the input signal decreases, then the output signal may exhibit a PAPR characteristic of 11dB or more.

Therefore, a problem exists of irregular communication signal quality due to irregularity in downlink throughput when the average power of the inputted communication varies. The throughput may be strong in low power outputs but can drastically decrease as the power approaches a rated value. Consequently, user traffic throughput may change according to the number of users.

### BRIEF DESCRIPTION OF THE DRAWINGS

Arrangements and embodiments may be described in detail with reference to the following drawings in which like reference numerals refer to like elements and wherein:

FIG. 1 is a block diagram of a communication system according to an example embodiment of the present invention;

FIG. 2 is a block diagram of the CFR apparatus shown in FIG. 1; and

FIG. 3 is a flow chart of an adaptive CFR method based on a power variation of an input signal in accordance with an example embodiment of the present invention.

### DETAILED DESCRIPTION

A detailed description may be provided with reference to the accompanying drawings. One of ordinary skill in the art may realize that the following description is illustrative only and is not in any way limiting. Other embodiments of the present invention may readily suggest themselves to such skilled persons having the benefit of this disclosure.

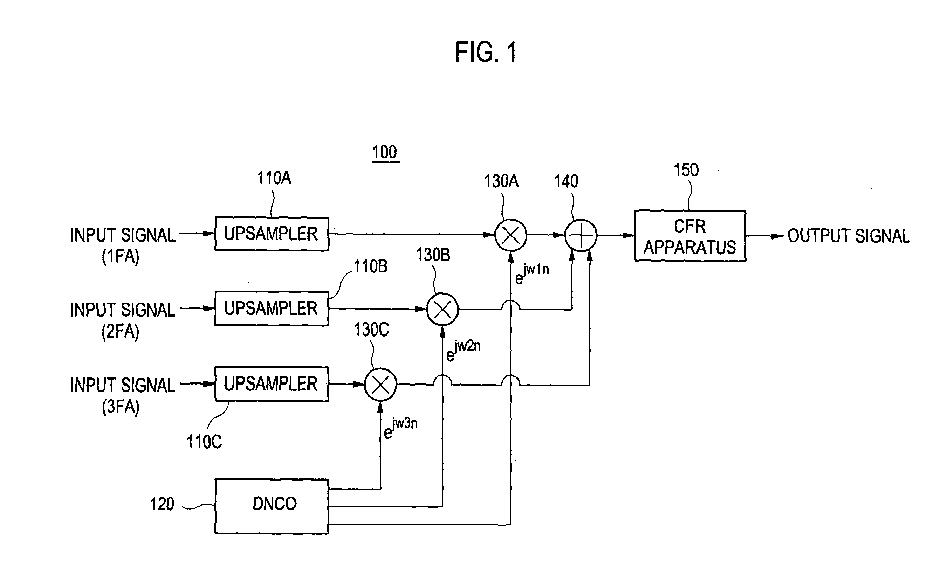

FIG. 1 is a block diagram of a communication system according to an example embodiment of the present invention. Other embodiments and configurations are also within the scope of the present invention. In FIG. 1, a communication system 100 is a 3FA communication system transmitting a communication signal using 3 FAs (Frequency Assignments).

The communication system 100 may include a plurality of up-samplers 110A-110C, a Digitally Numerically Controlled Oscillator (DNCO) 120 to provide offset frequency signals for the FAs, and mixers 130A-130C to shift the communication signals for the FAs to frequency bands corresponding to the FAs based on offset frequency signals for the FAs. The communication system 100 may also include an adder 140 to combine the shifted communication signals for the FAs into one communication signal and a CFR apparatus 150 to perform signal processing to reduce a PAPR of the combined signal.

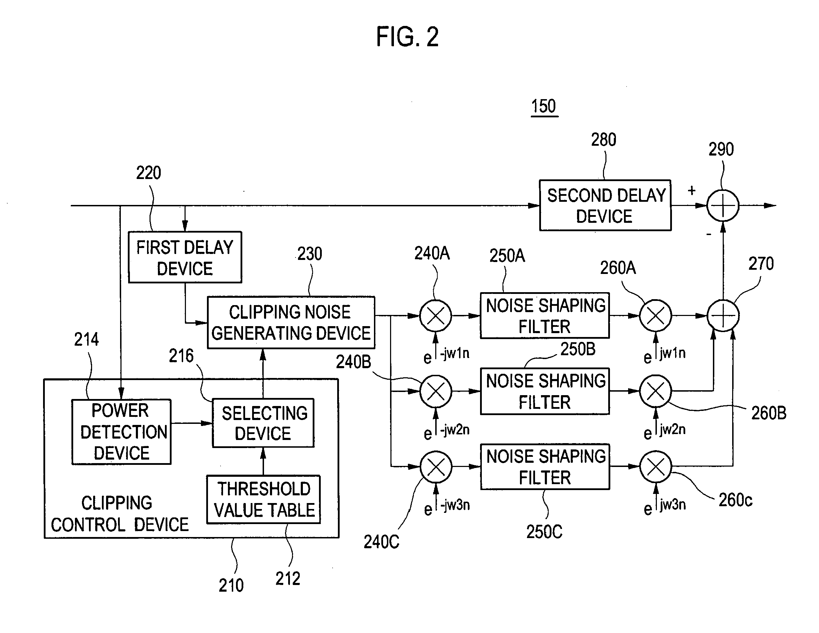

FIG. 2 is a block diagram of the CFR apparatus shown in FIG. 1. Other configurations are also within the scope of the present invention. In FIG. 2, the CFR apparatus 150 includes a clipping control device 210 to receive a communication signal from the adder 140 (shown in FIG. 1) and to select a clipping threshold value based on an average power of the inputted (received) communication signal to thereby control the clipping operation. The CFR apparatus 150 also includes a first delay device 220 to receive the communication signal from the adder 140 and to delay the received signal by a predetermined time (i.e., time 1). Still further, the CFR apparatus includes a clipping noise generating device 230 to receive the delayed communication signal from first delay device 220 and to generate a clipping noise signal for the inputted communication signal by using the selected clipping threshold value.

The CFR apparatus 150 also includes down converters 240A-240C to frequency shift each of the clipping noise signals inputted from the clipping noise generating device 230 to a baseband to separate the inputted signal for the corresponding FAs. The CFR apparatus 150 also includes noise shaping filters 250A-250C to normalize the shifted clipping noise signal, and up-converters 260A-260C to frequency shift the normalized clipping noise signal to the frequencies corresponding to the FAs. Additionally, the CFR apparatus 150 includes an adder 270 to add the clipping noise signals for the FAs. Still further, the CFR apparatus 150 includes a second delay device 280 to delay the signal inputted from the adder 140 (shown in FIG. 1) by a predetermined time (i.e., time 2), and a subtractor 290 to subtract the clipping noise signal inputted (or received) from the adder 270 from the delayed signal inputted (or received) from the second delay device 280.

The clipping control device 210 includes a threshold value table 212 to store predetermined clipping threshold values each corresponding to one of a plurality of potential average powers of the communication signal, a power detection device 214 to detect the average power of an interval of the communication signal currently being inputted, and a selecting device 216 to retrieve a clipping threshold value corresponding to the retrieved average power from the threshold value table 212.

The threshold value table 212 stores the clipping threshold values each corresponding to the average power of the communication signal. The clipping threshold value may be a pre-calculated value obtained by simulation. The value may be calculated so that the communication signal outputted from the CFR apparatus 150 satisfies both the predetermined PAPR and EVM requirements when the inputted communication signal is of the detected average power. The stored clipping threshold values may correspond to other values.

The CFR apparatus 150 may show statistical properties of a magnitude of RF or IF signals measured at the transceiver end or Digital to Analog Converter (DAC) output end of the communication system 100 by using a Complementary Cumulative Distribution Function (CCDF) characteristic curve. A horizontal axis of the CCDF characteristic curve may reflect/represent a magnitude or PAPR of the communication signal, whereas a vertical axis may reflect/represent a complementary cumulative distribution of the probability. As the clipping threshold value becomes smaller, the CCDF characteristic curve may shift to the left. Accordingly, the PAPR of the output communication signal may greatly decrease. However, excessive clipping may worsen the EVM of the output communication signal and thereby lead to deterioration of the quality of the communication signal. Therefore, there is a need for a CFR threshold value that satisfies both the predetermined PAPR and CFR requirements. However, finding an adequate CFR threshold value may be difficult. Thus, adequate CFR thresholds for input signals of different average power may be calculated beforehand by repeated simulation.

In order to detect the average power of the inputted communication signal, the power detection device 214, for example, squares I and Q signals of each of the communication signals and combines the squared signals. Then, the power detection device 214 performs a root operation on the combined signal. The power detection device 214 uses a predetermined number of samples of the communication signal to be transmitted in order to precisely measure the average signal. Such a power detection operation may be repeatedly performed for every predetermined number of samples. Other operations to determine the average power (or other factors) may also be used.

The selecting device 216 retrieves a clipping threshold value corresponding to the average power detected by the power detection device 112. The selecting device 216 outputs the retrieved clipping threshold value to the clipping noised generating device 230.

The first delay device 220 delays the communication signal inputted from the adder 140 by the predetermined time (time 1) to compensate for the time taken to perform the clipping threshold value selection operation at the power detection device 212 (i.e., time 1).

The clipping noise generating device 230 clips the communication signal inputted (or received) from the first delay device 220 based on the clipping threshold value selected by the clipping control device 210. Then, the clipping noise generating device 230 subtracts the clipped communication signal from the communication signal inputted (or received) from the first delay device 220 to thereby extract a portion of the communication signal inputted from the first delay device 220 that exceeds the selected clipping threshold value. The clipping noise generating device 230 outputs the extracted signal as a clipping noise signal.

The down-converters 240A-240C may shift a center frequency of each of the FA to 0 so that the generated clipping noise signal can be separated and normalized per FA. That is, each of the down converters 240A-240C may mix the generated clipping noise signal with a signal having a frequency that corresponds to the FAs. This is so the signal shifted from the baseband to each of the center frequencies of the FA can be shifted back to the baseband for each FA at the mixers 240A-240C arranged at a front end of the CFR apparatus 150. The clipping noise signals may be shifted to the baseband before being normalized because the noise shaping filters 250A-250C may be configured to have a process band centered around 0 frequency.

The noise shaping filters 250A-250C may normalize the shifted clipping noise signal per the FA, thereby removing any distortion throughout an entire spectrum introduced into the clipping noise signal by the extracting operation performed by the clipping noise generating device 230. The gain values for each of the noise shaping filters 150A-150C may be set to different values per each FA.

The up-converters 260A-260C may shift the normalized clipping noise signal from the baseband to the frequency bands each corresponding to one of the FAs. That is, the up-converters 260A-260C may mix each clipping noise signal outputted from the noise shaping filters 250A-250C with frequency signals corresponding to the FAs.

The multiple FA adder 270 may recombine all of the clipping noise signals that have been separated per FA for normalization into one clipping noise signal.

The second delay device 280 may delay the inputted signal by a time that it takes to generate the clipping noise signal for the communication signal inputted to the CFR apparatus 150 (i.e., time 2). That is, the second delay device 280 may delay the communication signal inputted to the CFR apparatus 150 to compensate for the time delay in shifting the inputted clipping noise signal to the baseband, to normalize the signal by the noise shaping filters 250A-250C, to shift the normalized clipping noise signals to the frequency bands per FA, and to add the signals into one signal.

The subtractor 290 may subtract the communication signal delayed in the second delay device 280 with the clipping noise signal combined in the multiple FA adder 270. That is, the subtractor 290 may output a final communication signal that is equivalent to the inputted communication signal subtracted by the clipping noise signal. According to one embodiment of the present invention, the PAPR of the inputted communication signal can be adaptively reduced in accordance with the change in the power of the inputted communication signal by generating the clipping noise signal reflecting the average power of the inputted signal.

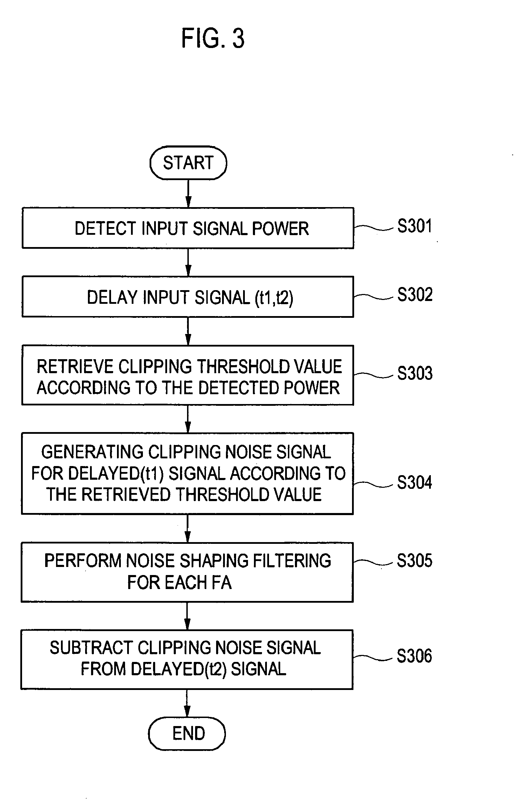

FIG. 3 is a flow chart of an adaptive CFR method based on the power variation of an input signal in accordance with an example embodiment of the present invention. Other operations, orders of operations and embodiments are also within the scope of the present invention. The CFR apparatus 150 may store the clipping threshold values for a plurality of average powers that a communication signal can have in the threshold value table 212. The clipping threshold value may satisfy both the PAPR and EVM requirements, which are predetermined for the average power of the communication signal.

In operation S301, the power detection device 214 of the CFR apparatus 150 may detect the average power of a certain interval of a communication signal currently being inputted. Such an average power detection may be achieved by adding the squares of I and Q signals of the input signal and performing a root operation on the added value, for example. Further, various power calculation methods may be employed to calculate an instantaneous power of the signal. The interval may imply a certain number of samples of the communication signals needed to precisely calculate the instantaneous power. The power detection operations of the inputted communication signal may be repeatedly performed for every predetermined number of samples.

In operation S302, the first and second delay devices 220, 280 of the CFR apparatus 150 may delay the inputted communication signal by predetermined times (e.g. time 1 and time 2), respectively. Such a time delay may be to compensate for the time taken to perform the threshold value control for the clipping operation in accordance with the average power of the input signal (time 1) and for the time taken to perform clipping and noise shaping filtering (time 2).

In operation S303, the selection device 214 of the CFR apparatus 150 may retrieve a pre-stored clipping threshold value that corresponds to the detected average power from the threshold value table 212 and output the value to the clipping noise generating device 230. By searching the threshold value table 116 storing the clipping threshold values for the average powers of the input signal, which has been predetermined by simulation, the clipping threshold value corresponding to the currently inputted signal is selected and output to the clipping noise generating device 130.

In operation S304, the clipping noise generating device 230 of the CFR apparatus 150 generates clipping noise signals for the communication signal, which has been delayed for the predetermined time (time 1) in accordance with the clipping threshold value. That is, the clipping noise signals are generated by extracting the amount exceeding the retrieved clipping threshold value from the signal delayed by the time taken for detecting the power of the input signal and searching and selecting the threshold value corresponding thereto as in operations S201 and S203.

In operation S305, each noise shaping filter 250A-250C of the CFR apparatus 150 may perform noise shaping filtering to the clipping noise signals corresponding to its FA. In particular, each down-converter 240A-240C of the CFR apparatus 150 may frequency shift one of the generated clipping noise signals so that the frequency band (FA band) of each clipping noise signal is shifted to the baseband. Then, each noise shaping filter 150A-150C may perform noise shaping filtering to the clipping noise signal that corresponds thereto so as to prevent any distortion in the entire spectrum of the clipping noise signals. Then, the up-converters 260A-260C of the CFR apparatus 150 may shift the normalized clipping noise signals corresponding to their FA to each of the frequency bands of their corresponding FAs. The multiple FA adder 170 of the CFR apparatus 150 may add the clipping noise signals for FAs into one clipping noise signal.

In operation S306, the subtractor 290 of the CFR apparatus 150 may subtract the inputted communication signal delayed at the second delay device 280 of the CFR apparatus 280 for a certain time (time 2) from the combined clipping noise signal and end the procedure. That is, in order to reduce the PAPR of the inputted communication signal, the clipping noise signal, which is an extracted portion of the inputted communication signal exceeding the clipping threshold value, may be normalized. Then, the normalized clipping noise signal may be subtracted from the inputted communication signal, which is outputted as a result. Operation steps 301 to S306 may be performed on a certain interval of the inputted communication signal (i.e., predetermined number of samples) from which an accurate instantaneous power of the communication signal can be detected. By repeatedly performing operations S301 to S306, the PAPR of the input signal can be adaptively reduced in accordance with the power variation in the input signal.

As explained above, the CFR method and apparatus according to an example embodiment of the present invention may detect the average power of a certain interval of a signal currently being inputted, select a pre-stored clipping threshold value that corresponds to the determined average power, and perform clipping operations of the CFR method according to the selected clipping threshold value, thereby maintaining the PAPR at the transceiver end despite any fluctuations in the average power of the input signal.

Also, the CFR apparatus and method according to an example embodiment of the present invention may calculate and store predetermined clipping threshold values that satisfy both the predetermined PAPR and EVM requirements, and select a threshold value that corresponds according to fluctuation in the average power of the input signal, thereby maintaining the quality of the output signal and the traffic throughput that is constant regardless of an average power variation in the input signal and the number of users present in the communication system.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A Crest Factor Reduction (CFR) apparatus in a communication system, comprising:
a clipping noise generating device to generate a clipping noise signal for a communication signal based on a clipping threshold value, and
a clipping control device to control the clipping threshold value based on an average power of the communication signal

2. The apparatus of claim 1, further comprising:
a delay device to delay the communication signal by a predetermined time and to output a delayed signal to the clipping noise generating device.

3. The apparatus of claim 1, wherein said clipping control device comprises:
a threshold value table to store a clipping threshold value corresponding to the average power of the communication signal;
a power detection device to detect the average power of an interval of the communication signal; and
a selecting device to retrieve the clipping threshold value corresponding to the detected average power from the threshold value table.

4. The apparatus of claim 3, wherein said stored clipping threshold value is a value set to satisfy both a predetermined CFR requirement and a predetermined Error Vector Magnitude (EVM) requirement for the average power of the communication signal.

5. The apparatus of claim 1, wherein said communication system supports a plurality of frequency assignments (FAs), and said communication signal is a signal generated by combining communication signals of each of the plurality of FAs.

6. The apparatus of claim 1, further comprising:
a plurality of down converters each coupled to the clipping noise generating device;
a plurality of noise shaping filters each coupled to a corresponding one of the down converters; and
a plurality of up converters each coupled to one of the noise shaping filters.

7. The apparatus of claim 6, further comprising an adder device coupled to the plurality of up converters.

8. The apparatus of claim 7, further comprising:
a delay device to delay the communication signal and provide a delayed communication signal; and
a subtractor device to the received delayed communication signal and an output of the first adder circuit, the subtractor device to perform a subtraction operation on the delayed communication signal based on the output of the first adder circuit.

9. An apparatus comprising:
a clipping control device to detect a power of a received communication signal and to provide a clipping threshold value based on the detected power;
a clipping noise generating device to generate a clipping noise signal based on the clipping threshold value;
a first delay device to delay the communication signal; and
a subtractor device to subtract the clipping noise signal from the delayed communication signal.

10. The apparatus of claim 9, further comprising:
a second delay device to delay the received communication signal and output a delayed communication signal to the clipping noise generating device, the clipping control device to detect the power of the delayed communication signal.

11. The apparatus of claim 9, wherein the clipping control device comprises:
a power detection device to detect an average power of the communication signal over an interval of time;
a threshold value table to store a plurality of clipping threshold values; and
a selecting device to select one of the clipping threshold values from the threshold value table based on the detected average power.

12. The apparatus of claim 11, wherein the selected one of the clipping threshold values satisfies both a Crest Factor Reduction (CFR) requirement and an Error Vector Magnitude (EVM) requirement for the average power of the communication signal.

13. The apparatus of claim 11, wherein said communication signal comprises a signal generated by combining communication signals of each of a plurality of frequency assignments.

14. The apparatus of claim 11, further comprising:
a plurality of down converters each coupled to the clipping noise generating device;
a plurality of noise shaping filters each coupled to a corresponding one of the down converters; and
a plurality of up converters each coupled to one of the noise shaping filters.

15. The apparatus of claim 14, further comprising an adder device to receive outputs of the plurality of up converters and provide the clipping noise signal to the subtractor device based on the received outputs of the plurality of up converters.

16. A method of implementing Crest Factor Reduction (CFR) in a communication system, comprising:
storing a clipping threshold value corresponding to a communication signal;
detecting an average power of the communication signal; and
generating a clipping noise signal for the communication signal based on the stored clipping threshold value.

17. The method of claim 16, wherein the stored clipping threshold value is set to satisfy both a predetermined CFR requirement and a predetermined error vector magnitude (EVM) requirement for the average power of the communication signal.

18. The method of claim 16, wherein storing the clipping noise signal delays the communication signal by a predetermined time and generates a clipping noise signal for the delayed communication signal.

19. The method of claim 16, further comprising delaying the communication signal and providing a delayed communication signal.

20. The method of claim 19, further comprising subtracting the clipping noise signal from the delayed communication signal.
